# EUROPEAN PATENT SPECIFICATION

(11) **EP 3 913 321 B1**
(45) Date of publication and mention of the grant of the patent: **28.12.2022**
(21) Application number: 21174662.3
(22) Date of filing: 19.05.2021
(51) Int. Cl.: G01B 5/02, G01B 5/08, G01B 21/04, G01B 3/00

(54) **EQUIPMENT FOR THE RESET, CALIBRATION AND MEASUREMENT OF MEASURING INSTRUMENTS**
AUSRÜSTUNG ZUM RÜCKSTELLEN, KALIBRIEREN UND MESSEN VON MESSGERÄTEN
ÉQUIPEMENT POUR LA RÉINITIALISATION, L'ÉTALONNAGE ET LA MESURE DES APPAREILS DE MESURE

(30) Priority: 21.05.2020 IT 202000011857
(43) Date of publication of application: 24.11.2021
(73) Proprietor: G.V. Societa' a Responsabilita' Limitata, 40017 San Giovanni in Persiceto (BO) (IT)
(72) Inventor: BALBONI, Gabriele, 40017 San Giovanni in Persiceto (BO) (IT)
(74) Representative: Brunacci, Marco

(56) References cited:
- CH-A5- 688 108
- GB-A- 2 112 942
- US-A- 5 287 631
- US-A1- 2007 068 219

## Description

### Technical Field

The present invention relates to a piece of equipment for the reset, calibration and measurement of measuring instruments.

### Background Art

Specifically, the term "measuring instruments" relates to a type of precision instruments, generally used for the measurement of metric quantities of objects. Within the scope of the present treatise, measuring instruments are split into two macro-categories:
- direct measuring instruments, such as e.g. bore gauges, calipers, or the like, which allow the object to be measured directly and display the value of the measurand by means of a display or other type of indicator; and
- indirect measuring instruments, including e.g. material measuring samples, stop rings, parallel gauge blocks, measuring masters, not-go gauges.

All measuring instruments need to be periodically checked and calibrated to ensure effective measurement of objects through metrological traceability.

The equipment for the reset, calibration and measurement of known type, i.e. horizontal measuring benches, operate by means of two contact points, also called fixed stop and movable stop, wherein the fixed stop represents the zero point of a reference scale and the movable stop runs in relation to the fixed stop, determining a distance measurable with extreme precision by the equipment itself.

In the first type of horizontal measuring benches, the movement of the movable stop, i.e. the search for the dimensional value on which to carry out the calibration operations of the instruments, is performed manually by an operator using a manual drive system.

By means of this system, the operator adjusts the position of the movable stop to define a desired width value.

The exact value is performed by the horizontal bench in question through the use of optical scale and linear encoder technology, and verified in turn by optical instruments such as laser interferometers.

In terms of usability, however, manual movement of the movable stop can lead to longer operating times.

Furthermore, manual handling is inevitably subject to the risk of human error, an issue which is most evident when performing reset and calibration operations on direct measuring instruments.

In this case, in fact, the application of a more or less intense force on the movable stop, in order to reproduce the exact dimensions of the measuring instrument, can lead to small differences in the position of the movable stop itself and, consequently, in the value measured by the equipment.

Nor should the fact be underestimated that this can also lead to a slight deformation of the measuring instrument and thus compromise its accuracy. Ultimately, the equipment of the manually operated type only performs very well for the measurement of indirect measuring instruments, and poorly for the calibration of direct measuring instruments.

A second type of equipment for the reset, calibration and measurement of measuring instruments consists of equipment of the automatic-motor-driven type.

The aforementioned automatic equipment is provided with an automatic movement system of the movable stop and with an electronic control unit configured to drive the system for the movement and high-precision positioning of the movable stop.

The movement of the movable stop is carried out automatically by setting a defined dimensional value (i.e. distance between the two measuring stops) through the electronic unit, which controls the movement system to position the movable stop at that exact value.

At that point, the measuring instrument can be placed between the two stops and compared accordingly.

However, such automatic equipment does not allow for the smooth and reliable control of material measuring samples or the measurement of objects.

Ultimately, the equipment of the automatic operation type is very efficient for calibrating direct measuring instruments, and not very efficient for measuring indirect measuring instruments, unless extremely complex and costly additional components are provided.

It is therefore clear that the known type of equipment for the reset, calibration and measurement of measuring instruments can be further improved. US2007068219 A1 discloses an apparatus for calibrating measuring instruments, such as bore gauges and the like, wherein the apparatus has a fixed block and a mobile block having contact surfaces, for supporting the gauging ends of a measuring instrument under calibration, and an automatic drive for driving the mobile block.

### Description of the Invention

The main object of the present invention is to devise a piece of equipment for the reset, calibration and measurement of measuring instruments which allows both direct measuring instruments and indirect measuring instruments to be easily checked and calibrated, as well as to enable objects in general to be measured.

Another object of the present invention is to devise a piece of equipment for the reset, calibration and measurement of measuring instruments which allows the control and measurement operations to be performed quickly and at the same time accurately.

Still another object of the present invention is to devise a piece of equipment for the reset, calibration and measurement of measuring instruments, which allows avoiding the risks related to the manual intervention by an operator.

Another object of the present invention is to devise a piece of equipment for the reset, calibration and measurement of measuring instruments, which allows overcoming the aforementioned drawbacks of the prior art within the scope of a simple, rational, easy, effective to use and affordable solution.

The objects set out above are achieved by the present piece of equipment for the reset, calibration and measurement of measuring instruments having the characteristics of claim 1.

### Brief Description of the Drawings

Other characteristics and advantages of the present invention will become more apparent from the description of a preferred, but not exclusive, embodiment of a piece of equipment for the reset, calibration and measurement of measuring instruments, illustrated by way of an indicative, yet non-limiting example, in the accompanying tables of drawings wherein:

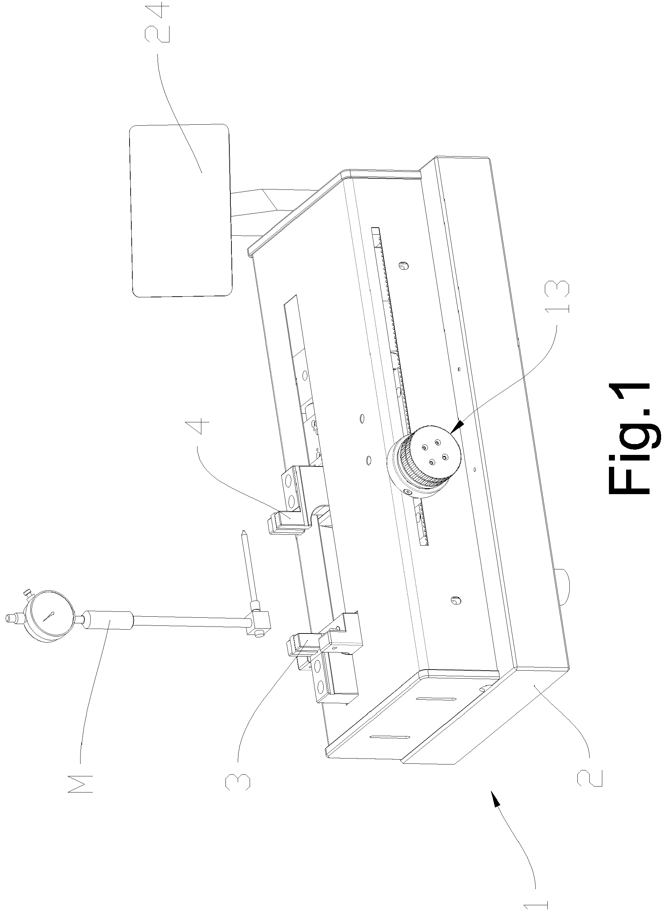

Figure 1 is an axonometric view of the piece of equipment according to the invention;

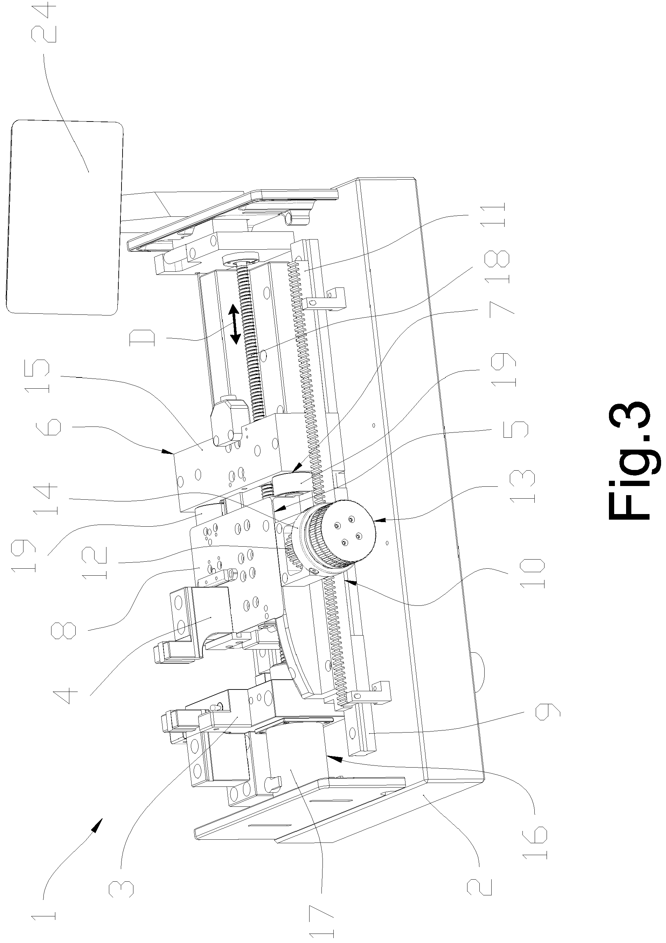

Figures 2-3 are axonometric views of the piece of equipment according to the invention, in two different modes of use;
Figure 4 is a further axonometric view of the piece of equipment according to the invention;

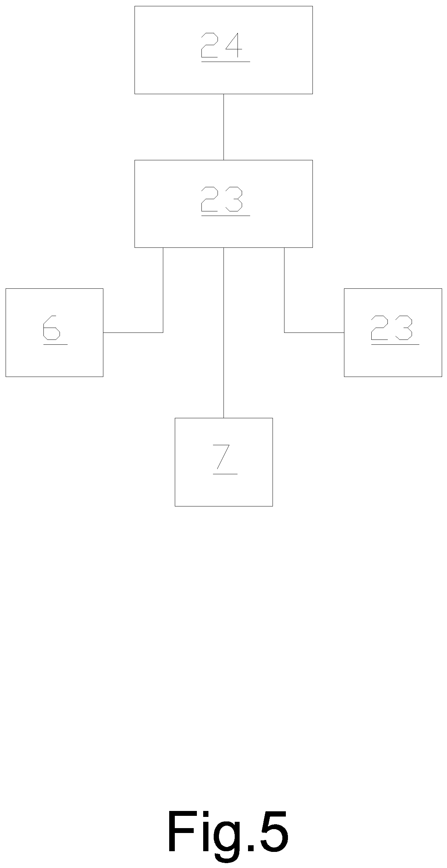

Figure 5 represents a block diagram of operational connection between the components of the equipment according to the invention.

### Embodiments of the Invention

With particular reference to these figures, reference numeral 1 globally indicates a piece of equipment for the reset, calibration and measurement of measuring instruments.

The equipment 1 can be used successfully both with direct measuring instruments such as, e.g., bore gauges, calipers or the like with two or three points of contact, and with indirect measuring instruments such as e.g. material measuring sample, stop rings, parallel gauge blocks, measuring masters, not-go gauges.

These measuring instruments need to be reset before each measurement on the measurand and, periodically, checked and calibrated in order to guarantee a reliable measurement in accordance with the object reference chain.

The equipment 1 according to the invention comprises at least one basic frame 2 and at least one pair of measuring stops 3, 4 associated with the basic frame 2, mutually movable and defining between them at least one measuring seat for at least one measuring instrument M.

More specifically, the measuring stops 3, 4 comprise at least one fixed stop 3 locked together with the basic frame 2 and at least one movable stop 4 movable in a sliding manner on the basic frame 2 to adjust the width of said measuring seat.

The basic frame 2 is intended to be positioned on a substantially horizontal holding surface and suitably made so as to dampen any vibrations that could compromise the measurement operation.

The measuring stops 3, 4 are arranged facing each other and the distance between them defines the measuring seat.

In particular, depending on the type of the measuring instrument M to be calibrated or measured, the measuring seat can be defined by the distance between two internal surfaces of the measuring stops 3, 4, i.e. the surfaces facing each other respectively, or by the distance between two external surfaces of the measuring stops themselves, i.e. the surfaces facing outwards.

The distance between the two measuring stops 3, 4, in other words, determines the measuring seat and is adapted to calibrate a measuring instrument M or to measure an object.

The movable stop 4 is movable with respect to the fixed stop 3 in order to vary the measuring seat in a substantially horizontal plane parallel to the holding surface.

The equipment 1 is also provided with:
- manual movement means 5 of the movable stop 4, associated with the basic frame 2 and manually operable by an operator;
- at least one automatic drive system 6, associable with the manual movement means 5 and adapted to move the movable stop 4 automatically; and
- removable connecting means 7, adapted to connect/disconnect the automatic drive system 6 to/from the manual movement means 5.

In actual facts, the equipment 1 allows the movement of the movable stop 4 both manually and automatically, in order to vary the distance between the two measuring stops 3, 4.

This solution permits considerably reducing the operating times and, at the same time, enables the calibration operation to be carried out extremely precisely, for any type of measuring instrument M.

In fact, if, for example, it is necessary to calibrate a measuring instrument M of the direct type (such as a gauge), then it is possible to usefully make use of the automatic drive system 6.

If, on the other hand, the need exists to calibrate or measure a measuring instrument M of the indirect type (e.g., a material measuring sample), use can be advantageously made of the manual movement means 5.

The manual movement means 5 e.g. comprise:
- at least one supporting structure 8 of the movable stop 4;
- at least one guidance assembly 9 associated with the basic frame 2, extending along a direction of sliding D and supporting the supporting structure 8 in a sliding manner; and
- at least one manual drive assembly 10 associated with the supporting structure 8.

The direction of sliding D is substantially horizontal.

The movable stop 4 is mounted on the supporting structure 8 which is sliding with respect to the basic frame 2 to displace the movable stop itself along the direction of sliding D.

In particular, the supporting structure 8 is manually movable by means of the manual drive assembly 10.

In the embodiment shown in the figures, the manual drive assembly 10 comprises:
- at least one rack element 11 associated with the basic frame 2 and extending along the direction of sliding D;
- at least one pinion element 12 associated with the supporting structure 8 and engaging on the rack element 11.

The rotation of the pinion element 12 causes the sliding of the supporting structure 8 along the direction of sliding D.

The manual drive assembly 10 also comprises at least one drive device 13 associated with the pinion element 12 and manually movable by the operator to set the pinion element 12 in rotation.

The drive device 13 is of the type, e.g., of a knob which extends outwards from the equipment 1.

In actual facts, the operator intervenes directly on the drive device 13, turning it manually in one of the directions of rotation. This movement is transmitted to the pinion element 12 which, by rotating in turn on the rack element 11, allows the sliding of the supporting structure 8 and, therefore, of the movable stop 4. The drive device 13 permits extremely precise and accurate adjustment of the position of the movable stop 4.

Further embodiments cannot however be ruled out wherein the manual drive assembly 10 is of a different type and the manual movement is carried out in a different way from that described herein.

The drive device 13 comprises a stop system, not visible in detail in the illustrations, which allows stopping the rotation of the pinion element 12 at the end of the positioning of the movable stop 4 and therefore avoiding any accidental movement of the supporting structure 8 during the calibration operation.

Conveniently, the drive device 13 also comprises at least one preload system 14 adapted to exert a predefined force on the movable stop 4, with the latter in contact with the measuring instrument M.

The preload system has the function of avoiding manual overloading by the operator on the measuring instrument M which could lead to deformation of the same; such deformation, even if minimal, can compromise the reliability of the subsequent measurements carried out using the instrument itself.

The preload system 14 is of a type known to the technician of the sector and comprises elastic means adapted to exert a constant force on the movable stop 4 and consequently on the measuring instrument M.

Substantially, the preload system makes it possible to avoid the risk of human error and always guarantees correct and repeatable positioning of the movable stop 4 with respect to the measuring instrument M.

The automatic drive system 6 comprises:
- at least one movement structure 15 associated in a sliding manner with the guidance assembly 9;
- at least one motorized actuating assembly 16 associated with the basic frame 2 and adapted to move the movement structure 15 along the direction of sliding D.

The movement structure 15 is arranged on the guidance assembly 9 opposite the fixed stop 3, with respect to the supporting structure 8.

In the embodiment shown in the figures, the motorized actuating assembly 16 comprises at least one motor 17 associated with the basic frame 2 and at least one transmission shaft 18 associated with the motor 17.

The transmission shaft 18 extends along the direction of sliding D and is operationally connected to the movement structure 15.

The transmission shaft 18 is of the type, e.g., of an evolving screw shaft and the movement structure 15 comprises a corresponding threaded hole engaging thereon.

The motor 17 is, therefore, adapted to set the transmission shaft 18 in rotation, which determines the sliding of the movement structure 15 on the guidance assembly 9.

More in detail, the movement structure 15 is adapted to push or pull the supporting structure 8 on the guidance assembly 9 along the direction of sliding D.

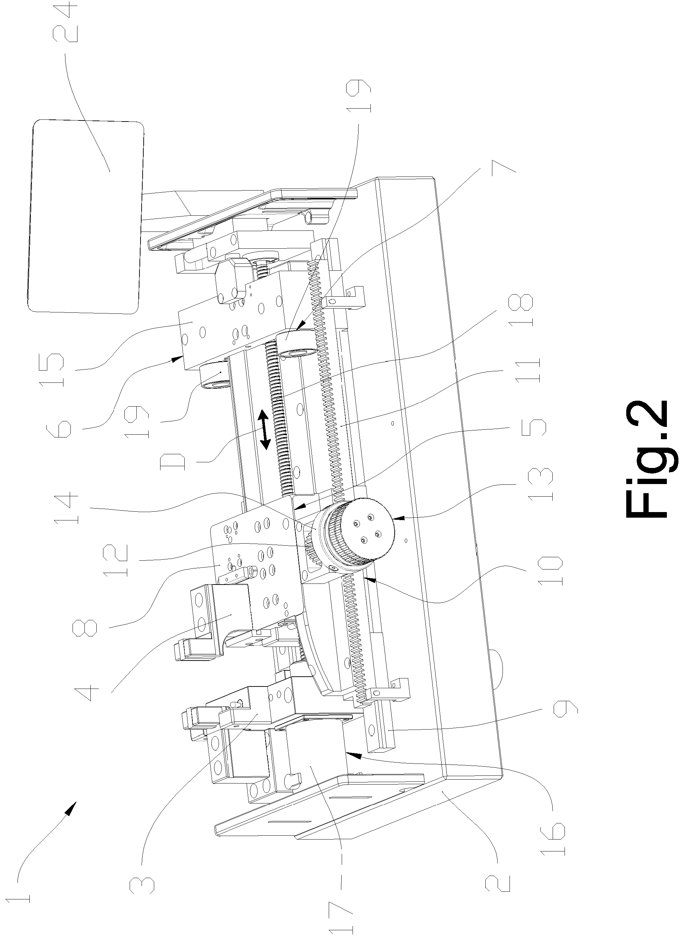

When not in use, the movement structure 15 is moved away from the supporting structure 8 and arranged at one end of the guidance assembly 9, opposite the fixed stop 3, so as to allow the manual movement of the movable stop 4. (Figure 2).

The movement structure 15 can be connected to the supporting structure 8 by means of the removable connecting means 7 in order to move the movable stop 4 automatically.

The removable connecting means 7 comprise at least one connecting device 19 associated with at least one of either the automatic drive system 6 or the manual movement means 5 and connectable in a removable manner to the other of either the automatic drive system 6 or the manual movement means 5.

In the embodiment shown in the figures, the connecting device 19 is associated with the automatic drive system 6 and is connectable in a removable manner to the manual movement means 5.

More in detail, the connecting device 19 is associated with the movement structure 15 and is connectable to the supporting structure 8 in a removable manner.

Advantageously, the connecting device 19 is of the electromagnetic type.

The connecting device 19 generates a magnetic field which is electrically activatable, e.g. by means of a solenoid, and allows for a transitory magnetic interaction with the supporting structure 8.

In the embodiment shown in the illustrations, the removable connecting means 7 comprise a plurality of connecting devices 19.

The movement structure 15 is therefore associable with the supporting structure 8 by interposition of the aforementioned connecting devices 19.

Such solution allows a better distribution of the pushing and pulling forces during the automatic movement of the movable stop 4.

Further embodiments cannot however be ruled out wherein the removable connecting means 7 are of a different type.

Conveniently, the equipment 1 comprises sensor means 20 adapted to detect the position of the movable stop 4 with respect to the basic frame 2.

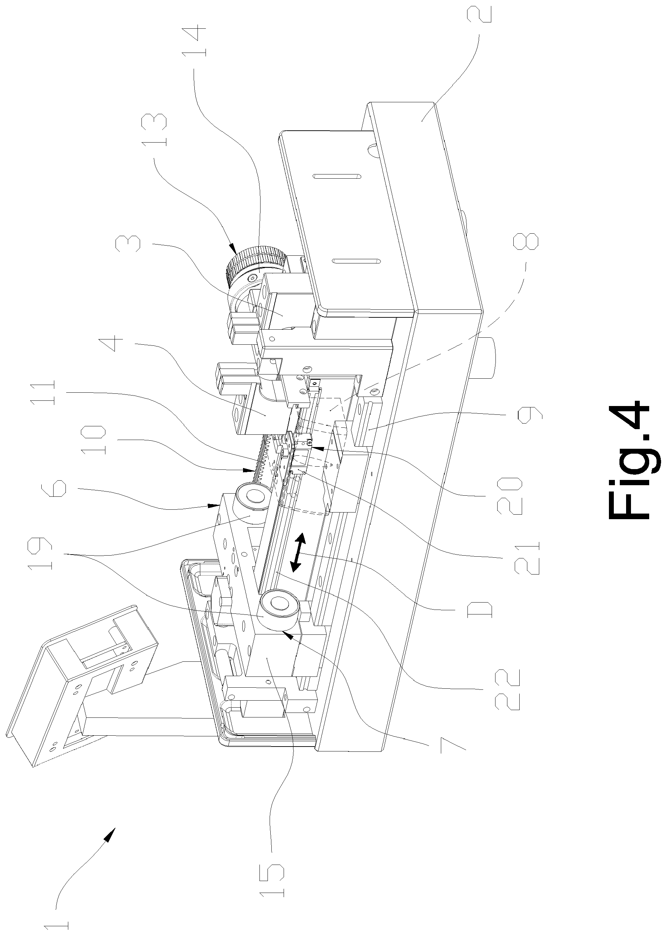

More in detail, the sensor means 20, of the type, e.g., of a linear measuring system, comprise a measuring head 21 associated with the supporting structure 8 and a measuring scale 22 associated with the basic frame 2 by means of which the measuring head 21 detects the position of the movable stop 4. (Figure 4)

In particular, the sensor means 20 are able to detect the position of the movable stop 4 in a highly precise way.

The equipment 1 also comprises at least one electronic control unit 23 operationally connected to at least one of the automatic drive system 6, the removable connecting means 7 or the sensor means 20.

More specifically, the electronic control unit 23 is operationally connected to the automatic drive system 6, the removable connecting means 7 and the sensor means 20.

Through a graphic interface 24, the operator is able to set a position value of the movable stop 4 and to activate/deactivate the automatic drive system 6 and the removable connecting means 7 to move the movable stop 4 automatically. Furthermore, by means of the graphic interface 24 it is possible to read the position value following the manual movement of the movable stop 4.

The operation of the equipment 1 according to the invention is as follows.

To measure measuring instruments M of the indirect type, i.e. the measurement of one or more characteristic dimensions of the same (e.g., the diameter of a stop ring or the width of a parallel gauge block), the operator advantageously makes use of the manual movement means 5.

In this case, the measuring instrument M is positioned in the measuring seat and the movable stop 4 is moved with respect to the basic frame 2 by means of the manual movement means 5.

In particular, by operating the drive device 13, the operator induces the rotation of the pinion element 12 and the shift of the supporting structure 8 on the guidance assembly 9 along the direction of sliding D.

Once the measuring instrument M has been contacted, the operator activates the stop system, in order to avoid accidental movement of the movable stop 4, and the preload system, so as to exert a predetermined and constant force on the measuring instrument M.

The sensor means 20 detect the exact position of the movable stop 4 and by means of the electronic control unit 23, transmit the value detected through the graphic interface 24; the operator is therefore able to effortlessly trace the dimension of the measuring instrument M placed between the two measuring stops 3 and 4.

In the same way it is also possible to measure the dimensions of various objects that are not necessarily measuring instruments.

In order to carry out a calibration of a measuring instrument M of the direct type, on the other hand, the operator can usefully make use of the automatic drive system 6, which is activated to connect to the manual movement means 5. More in detail, by means of the motorized actuating assembly 16, the movement structure 15 is moved to the supporting structure 8 and the connecting devices 19 are activated.

The successful connection between the supporting structure 8 and the movement structure 15 is determined by the sensor means 20, which are able to detect the movement of the supporting structure 8 caused by the contact with the movement structure 15.

At this point, the operator can set a position value through the graphic interface 24 and move the movable stop 4 automatically to position it at such position value.

The measuring instrument M is then positioned in the measuring seat and calibrated to the set position value.

In order to return to the manual mode, the connecting devices 19 are deactivated and the movement structure 15 is brought towards the end of the guidance assembly 9 to allow the manual movement of the supporting structure 8. Further embodiments of the present invention cannot however be ruled out wherein, for example, the manual drive assembly 10 and the motorized actuating assembly 16 are both associated with the movable stop 4 and wherein the motorized actuating assembly 16 is connected/disconnected to the supporting structure 8 according to operational requirements.

It has in practice been ascertained that the described invention achieves the intended objects and, in particular, the fact is underlined that the equipment according to the invention allows easily controlling and calibrating both direct measuring instruments and indirect measuring instruments thanks to the presence of the manual drive assembly and the motorized actuating assembly. In this regard, it should be noticed that the present invention makes it possible to synergistically combine in a single machine both the benefits of motorized movement and those of manual movement by the operator.

Moreover, the equipment according to the invention allows carrying out the control and calibration operations in a fast and at the same time precise way. Finally, thanks to the preload system, the equipment according to the invention eliminates the risks associated with manual intervention by an operator.

## Claims

1. Equipment (1) for the reset, calibration and measurement of measuring instruments, comprising:
- at least one basic frame (2);
- at least one pair of measuring stops (3, 4) associated with said basic frame (2), mutually movable and defining between them at least one measuring seat of at least one measuring instrument (M), said measuring stops (3, 4) comprising at least one fixed stop (3) locked together with said basic frame (2) and at least one movable stop (4) movable in a sliding manner on said basic frame (2) to adjust the width of said measuring seat;
- manual movement means (5) of said movable stop (4), associated with said basic frame (2) and manually operable by an operator;
- at least one automatic drive system (6), associable with said manual movement means (5) and adapted to move said movable stop (4) automatically; and
- removable connecting means (7), adapted to connect/disconnect said automatic drive system (6) to/from said manual movement means (5).

2. Equipment (1) according to claim 1, **characterized by** the fact that said removable connecting means (7) comprise at least one connecting device (19) associated with at least one of either said automatic drive system (6) or said manual movement means (5) and connectable in a removable manner to the other of either said automatic drive system (6) or said manual movement means (5).

3. Equipment (1) according to one or more of the preceding claims, **characterized by** the fact that said connecting device (19) is of the electromagnetic type.

4. Equipment (1) according to one or more of the preceding claims, **characterized by** the fact that said removable connecting means (7) comprise a plurality of said connecting devices (19).

5. Equipment (1) according to one or more of the preceding claims, **characterized by** the fact that said manual movement means (5) comprise:
- at least one supporting structure (8) of said movable stop (4)
- at least one guidance assembly (9) associated with said basic frame (2), extending along a direction of sliding (D) and supporting in a sliding manner said supporting structure (8); and
- at least one manual drive assembly (10) associated with said supporting structure (8).

6. Equipment (1) according to claim 5,
**characterized by** the fact that said manual drive assembly (10) comprises:
- at least one rack element (11) associated with said basic frame (2) and extending along said direction of sliding (D);
- at least one pinion element (12) associated with said supporting structure (8) and engaging on said rack element (11), the rotation of said pinion element (12) determining the sliding of said supporting structure (8) along said direction of sliding (D); and
- at least one drive device (13) associated with said pinion element (12) and manually movable by said operator to set said pinion element (12) in rotation.

7. Equipment (1) according to claim 6,
**characterized by** the fact that said drive device (13) comprises at least one preload system (14) adapted to exert a predefined force on said movable stop (4), with this latter in contact with said measuring instrument (M).

8. Equipment (1) according to claims 5 to 7,
**characterized by** the fact that said automatic drive system (6) comprises:
- at least one movement structure (15) associated in a sliding manner with said guidance assembly (9);
- at least one motorized actuating assembly (16) associated with said basic frame (2) and adapted to move said movement structure (15) along said direction of sliding (D);
said movement structure (15) being associable with said supporting structure (8) by interposition of said connecting devices (19).

9. Equipment (1) according to claim 8,
**characterized by** the fact that said motorized actuating assembly (16) comprises:
- at least one motor (17) associated with said basic frame (2); and
- at least one transmission shaft (18) associated with said motor (17), extending along said direction of sliding (D) and operationally connected to said movement structure (15).

10. Equipment (1) according to one or more of the preceding claims, **characterized by** the fact that it comprises sensor means (20) adapted to detect the position of said movable stop (4) with respect to said basic frame (2).

11. Equipment (1) according to one or more of the preceding claims, **characterized by** the fact that it comprises at least one electronic control unit (23) operationally connected to at least one of either said automatic drive system (6), said removable connecting means (7) or said sensor means (20).

## Patentansprüche

1. Ausrüstung (1) für das Zurücksetzen, das Kalibrieren und die Messung von Messinstrumenten, umfassend:
- mindestens einen Grundrahmen (2);
- mindestens ein Paar Messanschläge (3, 4), die dem Grundrahmen (2) zugeordnet sind, relativ zueinander beweglich sind und zwischen sich mindestens einen Messsitz von mindestens einem Messinstrument (M) definieren, wobei die Messanschläge (3, 4) mindestens einen festen Anschlag (3), der zusammen mit dem Grundrahmen (2) verriegelt ist, und mindestens einen beweglichen Anschlag (4) umfassen, der auf dem Grundrahmen (2) gleitend beweglich ist, um die Breite des Messsitzes einzustellen;
- manuelle Bewegungsmittel (5) des beweglichen Anschlags (4), die dem Grundrahmen (2) zugeordnet und von einer Bedienungsperson manuell betätigbar sind;
- mindestens ein automatisches Antriebssystem (6), das den manuellen Bewegungsmitteln (5) zuordnenbar und ausgebildet ist, den beweglichen Anschlag (4) automatisch zu bewegen; und
- abnehmbare Verbindungsmittel (7), die ausgebildet sind, das automatische Antriebssystem (6) mit den manuellen Bewegungsmitteln (5) zu verbinden bzw. von ihnen zu trennen.

2. Ausrüstung (1) nach Anspruch 1, **dadurch gekennzeichnet, dass** die abnehmbaren Verbindungsmittel (7) mindestens eine Verbindungsvorrichtung (19) umfassen, die mindestens einem von entweder dem automatischen Antriebssystem (6) oder den manuellen Bewegungsmitteln (5) zugeordnet ist und in einer abnehmbaren Weise dem anderen von entweder dem automatischen Antriebssystem (6) oder den manuellen Bewegungsmitteln (5) zuordnenbar ist.

3. Ausrüstung (1) nach einem oder mehreren der vorhergehenden Ansprüche, **dadurch gekennzeichnet, dass** die Verbindungsvorrichtung (19) von einer elektromagnetischen Art ist.

4. Ausrüstung (1) nach einem oder mehreren der vorhergehenden Ansprüche, **dadurch gekennzeichnet, dass** die abnehmbaren Verbindungsmittel (7) eine Vielzahl der Verbindungsvorrichtungen (19) umfassen.

5. Ausrüstung (1) nach einem oder mehreren der vorhergehenden Ansprüche, **dadurch gekennzeichnet, dass** die manuellen Bewegungsmitel (5) umfassen:
- mindestens eine Tragstruktur (8) für den beweglichen Anschlag (4);
- mindestens eine Führungseinheit (9), die dem Grundrahmen (2) zugeordnet ist, sich entlang einer Gleitrichtung (D) erstreckt und die Tragstruktur (8) gleitend trägt; und
- mindestens eine manuelle Antriebseinheit (10), die der Tragstruktur (8) zugeordnet ist.

6. Ausrüstung (1) nach Anspruch 5, **dadurch gekennzeichnet, dass** die manuelle Antriebseinheit (10) umfasst:
- mindestens ein Zahnstangenelement (11), das dem Grundrahmen (2) zugeordnet ist und sich entlang der Gleitrichtung (D) erstreckt;
- mindestens ein Ritzelelement (12), das der Tragstruktur (8) zugeordnet ist und in das Zahnstangenelement (11) eingreift, wobei die Drehung des Ritzelelements (12) das Gleiten der Tragstruktur (8) entlang der Gleitrichtung (D) bestimmt; und
- mindestens eine Antriebsvorrichtung (13), die dem Ritzelelement (12) zugeordnet ist und von der Bedienungsperson manuell bewegbar ist, um das Ritzelelement (12) in Drehung zu versetzen.

7. Ausrüstung (1) nach Anspruch 6, **dadurch gekennzeichnet, dass** die Antriebsvorrichtung (13) mindestens ein Vorspannsystem (14) umfasst, das ausgebildet ist, eine vorgegebene Kraft auf den beweglichen Anschlag (4) auszuüben, wobei letzterer in Kontakt mit dem Messinstrument (M) steht.

8. Ausrüstung (1) nach einem der Ansprüche 5 bis 7, **dadurch gekennzeichnet, dass** das automatische Antriebssystem (6) umfasst:
- mindestens eine Bewegungsstruktur (15), die der Führungseinheit (9) gleitend zugeordnet ist;
- mindestens eine motorisierte Betätigungseinheit (16), die dem Grundrahmen (2) zugeordnet und ausgebildet ist, die Bewegungsstruktur (15) entlang der Gleitrichtung (D) zu bewegen;
wobei die Bewegungsstruktur (15) durch Zwischenschaltung der Verbindungsvorrichtungen (19) der Tragstruktur (8) zuordnenbar ist.

9. Ausrüstung (1) nach Anspruch 8, **dadurch gekennzeichnet, dass** die motorisierte Betätigungseinheit (16) umfasst:
- mindestens einen Motor (17), der dem Grundrahmen (2) zugeordnet ist; und
- mindestens eine Übertragungswelle (18), die dem Motor (17) zugeordnet ist, sich entlang der Gleitrichtung (D) erstreckt und betriebsmäßig mit der Bewegungsstruktur (15) verbunden ist.

10. Ausrüstung (1) nach einem oder mehreren der vorhergehenden Ansprüche, **dadurch gekennzeichnet, dass** sie Sensormittel (20) umfasst, die ausgebildet sind, die Position des beweglichen Anschlags (4) in Bezug auf den Grundrahmen (2) zu erfassen.

11. Ausrüstung (1) nach einem oder mehreren der vorhergehenden Ansprüche, **dadurch gekennzeichnet, dass** sie mindestens eine elektronische Steuereinheit (23) umfasst, die betriebsmäßig mit mindestens einem von entweder dem automatischen Antriebssystem (6), den abnehmbaren Verbindungsmitteln (7) oder den Sensormitteln (20) verbunden ist.

## Revendications

1. - Equipement (1) pour la réinitialisation, l'étalonnage et la mesure d'instruments de mesure, comprenant :
- au moins un châssis de base (2) ;
- au moins une paire de butées de mesure (3, 4) associées audit châssis de base (2), mutuellement mobiles et définissant entre elles au moins un siège de mesure d'au moins un instrument de mesure (M), lesdites butées de mesure (3, 4) comprenant au moins une butée fixe (3) verrouillée conjointement avec ledit châssis de base (2) et au moins une butée mobile (4) qui est mobile de manière coulissante sur ledit châssis de base (2) pour régler la largeur dudit siège de mesure ;
- des moyens de déplacement manuels (5) de ladite butée mobile (4), associés audit châssis de base (2) et actionnables manuellement par un opérateur ;
- au moins un système d'entraînement automatique (6), apte à être associé auxdits moyens de déplacement manuels (5) et apte à déplacer ladite butée mobile (4) automatiquement ; et
- des moyens de liaison amovibles (7), aptes à relier/séparer ledit système d'entraînement automatique (6) auxdits/desdits moyens de déplacement manuels (5).

2. - Equipement (1) selon la revendication 1, **caractérisé par le fait que** lesdits moyens de liaison amovibles (7) comprennent au moins un dispositif de liaison (19) associé à au moins un dudit système d'entraînement automatique (6) et desdits moyens de déplacement manuels (5) et apte à être relié d'une manière amovible à l'autre dudit système d'entraînement automatique (6) et desdits moyens de déplacement manuels (5).

3. - Equipement (1) selon une ou plusieurs des revendications précédentes, **caractérisé par le fait que** ledit dispositif de liaison (19) est du type électromagnétique.

4. - Equipement (1) selon une ou plusieurs des revendications précédentes, **caractérisé par le fait que** lesdits moyens de liaison amovibles (7) comprennent une pluralité desdits dispositifs de liaison (19).

5. - Equipement (1) selon une ou plusieurs des revendications précédentes, **caractérisé par le fait que** lesdits moyens de déplacement manuels (5) comprennent :
- au moins une structure de support (8) de ladite butée mobile (4) ;
- au moins un ensemble de guidage (9) associé audit châssis de base (2), s'étendant le long d'une direction de coulissement (D) et supportant d'une manière coulissante ladite structure de support (8) ; et
- au moins un ensemble d'entraînement manuel (10) associé à ladite structure de support (8).

6. - Equipement (1) selon la revendication 5, **caractérisé par le fait que** ledit ensemble d'entraînement manuel (10) comprend :
- au moins un élément crémaillère (11) associé audit châssis de base (2) et s'étendant le long de ladite direction de coulissement (D) ;
- au moins un élément pignon (12) associé à ladite structure de support (8) et s'engageant sur ledit élément crémaillère (11), la rotation dudit élément pignon (12) déterminant le coulissement de ladite structure de support (8) le long de ladite direction de coulissement (D) ; et
- au moins un dispositif d'entraînement (13) associé audit élément pignon (12) et mobile manuellement par ledit opérateur pour mettre ledit élément pignon (12) en rotation.

7. - Equipement (1) selon la revendication 6, **caractérisé par le fait que** ledit dispositif d'entraînement (13) comprend au moins un système de précharge (14) apte à exercer une force prédéfinie sur ladite butée mobile (4), cette dernière étant en contact avec ledit instrument de mesure (M).

8. - Equipement (1) selon les revendications 5 à 7, **caractérisé par le fait que** ledit système d'entraînement automatique (6) comprend :
- au moins une structure de déplacement (15) associée d'une manière coulissante audit ensemble de guidage (9) ;
- au moins un ensemble d'actionnement motorisé (16) associé audit châssis de base (2) et apte à déplacer ladite structure de déplacement (15) le long de ladite direction de coulissement (D) ;
ladite structure de déplacement (15) étant apte à être associée à ladite structure de support (8) par interposition desdits dispositifs de liaison (19).

9. - Equipement (1) selon la revendication 8, **caractérisé par le fait que** ledit ensemble d'actionnement motorisé (16) comprend :
- au moins un moteur (17) associé audit châssis de base (2) ; et
- au moins un arbre de transmission (18) associé audit moteur (17), s'étendant le long de ladite direction de coulissement (D) et relié de manière fonctionnelle à ladite structure de déplacement (15).

10. - Equipement (1) selon une ou plusieurs des revendications précédentes, **caractérisé par le fait qu'**il comprend des moyens de détection (20) aptes à détecter la position de ladite butée mobile (4) par rapport audit châssis de base (2).

11. - Equipement (1) selon une ou plusieurs des revendications précédentes, **caractérisé par le fait qu'**il comprend au moins une unité de commande électronique (23) reliée de manière fonctionnelle à au moins un dudit système d'entraînement automatique (6), desdits moyens de liaison amovibles (7) et desdits moyens de détection (20).
